# EUROPEAN PATENT APPLICATION

(11) **EP 4 191 023 A1**
(43) Date of publication of application: **07.06.2023**
(21) Application number: 22156420.6
(22) Date of filing: 11.02.2022
(51) Int. Cl.: F01D 5/28, C04B 41/00, C23C 28/00

(54) **ENVIRONMENTAL BARRIER COATINGS CONTAINING A RARE EARTH DISILICATE AND A SECOND PHASE MATERIAL**

(30) Priority: 06.12.2021 IN 202111056416; 28.01.2022 US 202217587508
(71) Applicant: General Electric Company, Schenectady, NY 12345 (US)
(72) Inventor: SARRAFI-NOUR, Reza, Niskayuna, 12309 (US); RAMASWAMY, Vidya, La Canada, 91011 (US); SHUKLA, Adarsh, 560066 Bangalore (IN); NAYAK, Mohandas, 560066 Bangalore (IN); EADON, Geoffrey Mark, Niskayuna, 12309 (US)
(74) Representative: Openshaw & Co.

(57) **Abstract**

An coated component is provided. The coated component includes a component substrate (400) and bond coat layer (310) comprising silicon deposited on the component substrate. A composite layer (340) is deposited on the bond coat layer (310). The composite layer (340) includes a rare earth disilicate and a second phase material. The composite layer has a thickness (T) from about 0.05 mm to about 2.25 mm, and a coefficient of thermal expansion that is different by a value of about 0 to about 2.25 from a coefficient of thermal expansion of the component substrate upon which the bond coat layer is deposited.

## Description

### PRIORITY INFORMATION

The present application claims priority to Indian Provisional Patent Application Serial Number 202111056416 filed on December 6, 2021.

### FIELD OF TECHNOLOGY

The present disclosure relates generally to coated components including environmental barrier coatings (EBCs) and gas turbine engine components coated with the same. More particularly, embodiments described herein generally relate to EBCs for a coated component that include a composite layer containing rare earth disilicate and a second phase material.

### BACKGROUND

The operating environment within a gas turbine engine can be thermally and chemically hostile. Although high temperature iron, nickel and cobalt-based superalloys have been developed for engine components, the components formed from such alloys often may require long service exposures if located in certain sections of a gas turbine engine, such as the turbine and/or combustor sections. EBCs can be applied to components to protect them from the harsh environment in high temperature engine sections. However, alternative EBCs with corrosion resistance and/or resistance to CMAS infiltration would be welcomed in the art.

### BRIEF DESCRIPTION OF THE DRAWINGS

A full and enabling disclosure of the present disclosure, including the best mode thereof, directed to one of ordinary skill in the art, is set forth in the specification, which makes reference to the appended Figs., in which:
FIG. 1 illustrates a cross-sectional view of one embodiment of a gas turbine engine that may be utilized within an aircraft in accordance with aspects of the present subject matter, particularly illustrating the gas turbine engine configured as a high-bypass turbofan jet engine;
FIG. 2 is a cross-sectional representation of an EBC according to example embodiments of the present disclosure;
FIG. 3 is a cross-sectional representation of an EBC applied to a component according to example embodiments of the present disclosure; and
FIG. 4 is a cross-sectional representation of an EBC applied to a component according to example embodiments of the present disclosure

Repeat use of reference characters in the present specification and drawings is intended to represent the same or analogous features or elements of the present disclosure.

### DETAILED DESCRIPTION OF PARTICULAR EMBODIMENTS

Reference now will be made in detail to embodiments of the present disclosure, one or more examples of which are illustrated in the drawings. Each example is provided by way of explanation of the present disclosure, not limitation thereof. In fact, it will be apparent to those skilled in the art that various modifications and variations can be made in the present disclosure without departing from the scope or spirit of the present disclosure. For instance, features illustrated or described as part of one embodiment can be used with another embodiment to yield a still further embodiment. Thus, it is intended that the present disclosure covers such modifications and variations as come within the scope of the appended claims and their equivalents.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The singular forms "a", "an", and "the" include plural references unless the context clearly dictates otherwise.

As used herein, the terms "first", "second", and "third" may be used interchangeably to distinguish one component from another and are not intended to signify location or importance of the individual components.

As used herein, the terms "substantially free" are understood to mean completely free of said constituent, or inclusive of trace amounts of same. "Trace amounts" are those quantitative levels of chemical constituent that are barely detectable and provide no benefit to the functional or aesthetic properties of the subject composition.

Chemical elements are discussed in the present disclosure using their common chemical abbreviation, such as commonly found on a periodic table of elements. For example, hydrogen is represented by its common chemical abbreviation H; helium is represented by its common chemical abbreviation He; and so forth.

Approximating language, as used herein throughout the specification and claims, is applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 1, 2, 4, 10, 15, or 20 percent margin. These approximating margins may apply to a single value, either or both endpoints defining numerical ranges, and/or the margin for ranges between endpoints.

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

Higher operating temperatures for gas turbine engines are continuously being sought in order to improve their efficiency. However, as operating temperatures increase, the high temperature durability of the components of the engine must correspondingly increase. Significant advances in high temperature capabilities have been achieved through the formulation of iron, nickel, and cobalt-based superalloys. While superalloys have found wide use for components used throughout gas turbine engines, and especially in the higher temperature sections, alternative lighter-weight component materials have been proposed.

Ceramic matrix composites (CMCs) are a class of materials that consist of a reinforcing material surrounded by a ceramic matrix phase. Such materials, along with certain monolithic ceramics (i.e., ceramic materials without a reinforcing material), are currently being used for higher temperature applications. These ceramic materials are lightweight compared to superalloys, yet can still provide strength and durability to the component made therefrom. Therefore, such materials are currently being considered for many gas turbine components used in higher temperature sections of gas turbine engines, such as airfoils (e.g., turbines, and vanes), combustors, shrouds and other like components, that would benefit from the lighter-weight and higher temperature capability these materials can offer.

CMC and monolithic ceramic components can be coated with EBCs to protect them from the harsh environment of high temperature engine sections. EBCs can provide a dense, hermetic seal against the corrosive gases in the hot combustion environment, which can rapidly oxidize silicon-containing CMCs and monolithic ceramics. Additionally, under service conditions, certain EBCs in the hot section of the engine can be exposed to various modes of damage, including erosion, oxidation and corrosion from exposure to gaseous products of combustion, foreign object damage and attack from environmental contaminants.

Environmental contaminants that can be present in the air include sand, dirt, volcanic ash, sulfur in the form of sulfur dioxide, fly ash, particles of cement, runway dust, and other pollutants that may be expelled into the atmosphere, such as metallic particulates, such as magnesium, calcium, aluminum, silicon, chromium, nickel, iron, barium, titanium, alkali metals and compounds thereof, including oxides, carbonates, phosphates, salts and mixtures thereof. These environmental contaminants are in addition to the corrosive and oxidative contaminants that result from the combustion of fuel. These contaminants can adhere to the surfaces of the hot section components, which are typically coated with an EBC.

At the operating temperature of the engine, these contaminants can form contaminant compositions on the EBC. These contaminant compositions typically include calcium, magnesia, alumina, silica (CMAS), and their deposits are referred to as CMAS. At temperatures above about 2240° F, these CMAS compositions may become liquid, infiltrate into the EBC and cause deleterious physical and chemical interactions.

The EBC spallation due to CMAS is particularly noteworthy in jet engines as their operating temperatures have increased to improve efficiency. High concentrations of fine sand and dust in the ambient air can accelerate CMAS degradation, hence reducing the effective service life of the EBC and the associated engine component.

The present disclosure provides an EBC that includes a composite layering including a rare earth silicate and a second phase material. Advantageously, the second phase material can include certain materials designed to improve functional performance of the EBC. For example, in certain embodiments, the second phase material can include corrosion resistant materials to improve corrosion resistance of the EBC. In certain other embodiments, the second phase material can include materials configured to reduce CMAS infiltration and/or degradation of the EBC.

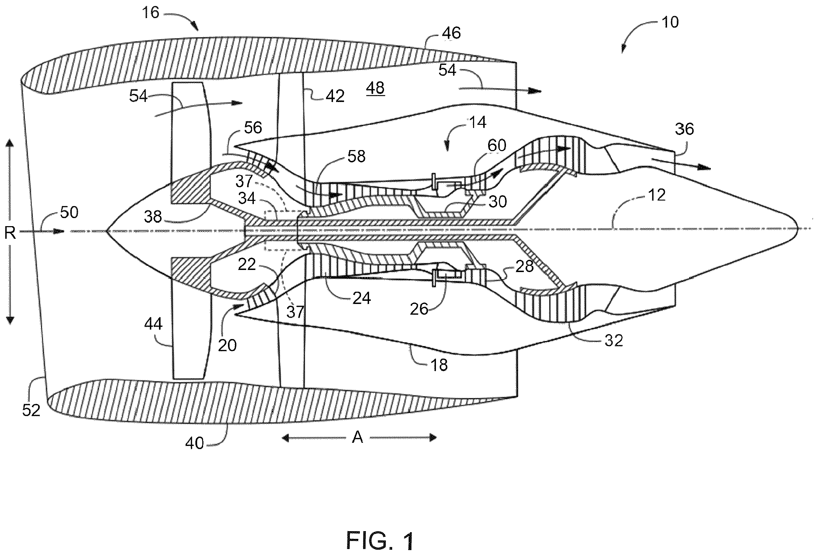

Referring now to the drawings, FIG. 1 illustrates a cross-sectional view of one embodiment of a gas turbine engine 10 that may be utilized within an aircraft in accordance with aspects of the present subject matter. More particularly, for the embodiment of FIG. 1, the gas turbine engine is a high-bypass turbofan jet engine, with the gas turbine engine 10 being shown having a longitudinal or axial centerline axis 12 extending therethrough along an axial direction A for reference purposes. The gas turbine engine 10 further defines a radial direction R extended from the centerline 12. Although an exemplary turbofan embodiment is shown, it is anticipated that the present disclosure can be equally applicable to turbomachinery in general, such as an open rotor turbofan engine (e.g., a turbofan without an outer nacelle), a turboshaft, turbojet, or a turboprop configuration, including marine and industrial turbine engines and auxiliary power units.

In general, the gas turbine engine 10 includes a turbomachine 14 and a fan section 16 positioned upstream thereof. The turbomachine 14 generally includes a substantially tubular outer casing 18 that defines an annular inlet 20. In addition, the outer casing 18 may further enclose and support a low pressure (LP) compressor 22 for increasing the pressure of the air that enters the turbomachine 14 to a first pressure level. A multi-stage, axial-flow high pressure (HP) compressor 24 may then receive the pressurized air from the LP compressor 22 and further increase the pressure of such air. The pressurized air exiting the HP compressor 24 may then flow to a combustor 26 within which fuel is injected into the flow of pressurized air, with the resulting mixture being combusted within the combustor 26. The high energy combustion products are directed from the combustor 26 along the hot gas path of the gas turbine engine 10 to a high pressure (HP) turbine 28 for driving the HP compressor 24 via a high pressure (HP) shaft 30 or spool, and then to a low pressure (LP) turbine 32 for driving the LP compressor 22 and fan section 16 via a low pressure (LP) shaft 34 or spool that is generally coaxial with HP shaft 30. After driving each of turbines 28 and 32, the combustion products may be expelled from the turbomachine 14 via an exhaust nozzle 36 to provide propulsive jet thrust.

Additionally, the fan section 16 of the gas turbine engine 10 generally includes a rotatable, axial-flow fan rotor 38 configured to be surrounded by an annular fan casing 40. In particular embodiments, the LP shaft 34 may be connected directly to the fan rotor 38, such as in a direct-drive configuration. In alternative configurations, the LP shaft 34 may be connected to the fan rotor 38 via a speed reduction device 37 such as a reduction gear gearbox in an indirect-drive or geareddrive configuration. Such speed reduction devices may be included between any suitable shafts/spools within the gas turbine engine 10 as desired or required.

It should be appreciated by those of ordinary skill in the art that the fan casing 40 may be configured to be supported relative to the turbomachine 14 by a plurality of substantially radially-extending, circumferentially-spaced outlet guide vanes 42. As such, the fan casing 40 may enclose the fan rotor 38 and its corresponding fan rotor blades (fan blades 44). Moreover, a downstream section 46 of the fan casing 40 may extend over an outer portion of the turbomachine 14 so as to define a secondary, or by-pass, airflow conduit 48 that provides additional propulsive jet thrust.

During operation of the gas turbine engine 10, it should be appreciated that an initial airflow (indicated by arrow 50) may enter the gas turbine engine 10 through an associated inlet 52 of the fan casing 40. The air flow 50 then passes through the fan blades 44 and splits into a first compressed air flow (indicated by arrow 54) that moves through the by-pass conduit 48 and a second compressed air flow (indicated by arrow 56) which enters the LP compressor 22. The pressure of the second compressed air flow 56 is then increased and enters the HP compressor 24 (as indicated by arrow 58). After mixing with fuel and being combusted within the combustor 26, the combustion products 60 exit the combustor 26 and flow through the HP turbine 28. Thereafter, the combustion products 60 flow through the LP turbine 32 and exit the exhaust nozzle 36 to provide thrust for the gas turbine engine 10.

Various components of the gas turbine engine 10, can include the EBC of the present disclosure. For example, in various embodiments, the articles of the present disclosure can include, without limitation, a turbine engine component selected from the group consisting of a combustor component, turbine blades, shrouds, nozzles, heat shields, and vanes.

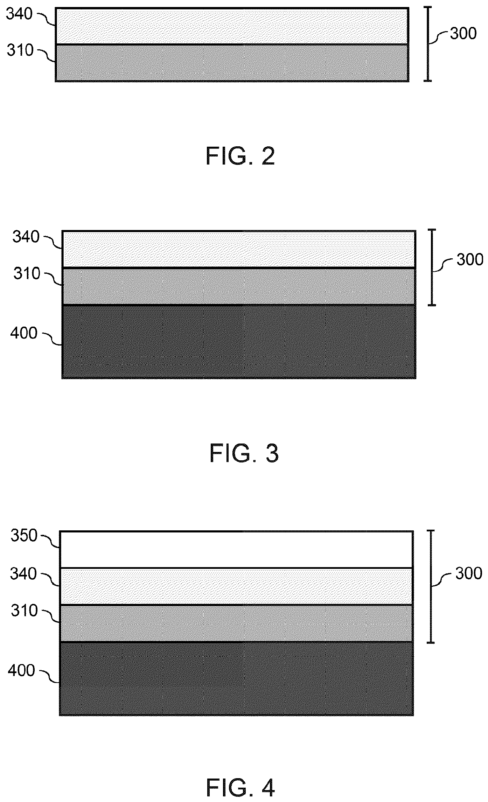

FIG. 2 depicts, in cross-section, the coating of the present disclosure. EBC 300 includes a bond coat 310 (e.g., silicon) having a composite layer 340 disposed thereon. The composite layer 340 can include a rare earth silicate (e.g., a rare earth disilicate) and a second phase material. FIG. 3 depicts, in cross-section, the EBC 300 of FIG. 2 disposed on a component 400, such as a gas turbine engine component.

The component 400 may be any material comprising silicon, such as a ceramic or metal alloy, for example. The component 400 may include a ceramic material, such as silicon carbide, silicon nitride, silicon carbonitride, silicon oxynitride, and silicon aluminum oxynitride for example. In certain embodiments, the component 400 can include composite materials such as metal matrix composites (MMCs) or ceramic matrix composites (CMCs). Composite materials, generally comprise a fibrous reinforcement material embedded in matrix material, such as polymer, ceramic, or metal material. The reinforcement material serves as a loadbearing constituent of the composite material, while the matrix of a composite material serves to bind the fibers together and act as the medium by which an externally applied stress is transmitted and distributed to the fibers.

As used herein, ceramic-matrix-composite or "CMCs" refers to silicon-containing, or oxide-oxide, matrix and reinforcing materials. Some examples of CMCs acceptable for use herein can include, but are not limited to, materials having a matrix and reinforcing fibers comprising non-oxide silicon-based materials such as silicon carbide, silicon nitride, silicon oxycarbides, silicon oxynitrides, and mixtures thereof. Examples include, but are not limited to, CMCs with a silicon carbide matrix and silicon carbide fiber; silicon nitride matrix and silicon carbide fiber; silicon carbide matrix and carbon fiber and silicon carbide/silicon nitride matrix mixture and silicon carbide fiber. Furthermore, CMCs can have a matrix and reinforcing fibers comprised of oxide ceramics. Specifically, the oxide-oxide CMCs may be comprised of a matrix and reinforcing fibers comprising oxide-based materials such as aluminum oxide (Al₂O₃), silicon dioxide (SiO₂), aluminosilicates, and mixtures thereof. Aluminosilicates can include crystalline materials such as mullite (3Al₂O₃ 2SiO₂), as well as glassy aluminosilicates.

Exemplary CMC materials may include silicon carbide (SiC), silicon, silica, or alumina matrix materials and combinations thereof. Ceramic fibers and/or carbon fibers may be embedded within the matrix, such as oxidation stable reinforcing fibers including monofilaments like sapphire and silicon carbide (e.g., Textron's SCS-6), as well as rovings and yarn including silicon carbide (e.g., Nippon Carbon's NICALON^{®}, Ube Industries' TYRANNO^{®}, and Dow Coming's SYLRAMIC^{®}), aluminosilicates (e.g., Nextel's 440 and 480), carbon fibers, and chopped whiskers and fibers (e.g., Nextel's 440 and SAFFIL^{®}), and optionally ceramic particles (e.g., oxides of Si, Al, Zr, Y, and combinations thereof) and inorganic fillers (e.g., pyrophyllite, wollastonite, mica, talc, kyanite, and montmorillonite). For example, in certain embodiments, bundles of the fibers, which may include a ceramic refractory material coating, are formed as a reinforced tape, such as a unidirectional reinforced tape. A plurality of the tapes may be laid up together to form a preform component. The bundles of fibers may be impregnated with a slurry composition prior to forming the preform or after formation of the preform. The preform may then undergo thermal processing, such as a cure or burnout to yield a high char residue in the preform, and subsequent chemical processing, such as melt-infiltration with silicon, to arrive at a component formed of a CMC material having a desired chemical composition.

The component 400 may be coated with a bond coat 310 comprising silicon. According to one embodiment, the bond coat 310 comprises silicon metal applied to the component 400. The bond coat 310 can have a thickness ranging from about 50 micrometers to about 150 micrometers, such as about 70 micrometers to about 120 micrometers, such as about 100 micrometers. In other embodiments, however, the bond coat 310 can have a thickness of about 0.0253 to about 0.506 mm (1 to 20 mils), and more typically from about 0.051 to about 0.152 mm (2 to 6 mils). Alternatively, the component 400 may be pre-oxidized to provide a silica (SiO₂) bond coat. The bond coat 310 can prevent oxidation of the underlying component and a corresponding release of gases, formation of gas bubbles, and spallation of the environmental barrier coating. The bond coat 310 can also provide improved adhesion of subsequently applied coats, such as the composite layer 340. The bond coat 310 can also decrease the risk that application of the composite layer 340 will damage the underlying component 400. The bond coat 310 can be applied to the component 400 by any known method of depositing a solid coating, such as by thermal spraying, plasma spraying, and any known application techniques. Further, the terms "applied" and "deposited" can be used interchangeable herein.

A composite layer 340 is disposed adjacent to and/or on the silicon bond coat 310. The composite layer 340 can include both rare earth disilicate materials, which have CTEs that are well-matched to the underlying component 400 substrate, and second phase materials, which may not include materials that are well-matched to the CTE of the underlying component 400 substrate. For instance, the underlying component 400 substrate can have a first CTE (Ci), while the composite layer 340, including both a rare earth disilicate material and a second phase material, has a second CTE (C₂). The difference Δ_{C} between C₁ and C₂ can vary. For example, depending on the component 400 materials and the selected second phase materials, Δ_{C} can range anywhere from about 0 to about 2.25. If the CTE mismatch between the substrate and coating material is too great this can lead to cracking and/or spallation and failure of the coating material. Additionally, if composite layer 340 is applied at a thickness that is too great given the CTE mismatch, degradation (e.g., delamination and spallation) of the composite layer 340 can occur.

Accordingly, the inventors of the present disclosure have discovered that with particular selection of second phase materials and application of the composite layer 340 at certain thicknesses, delamination, spallation, and/or failure of the coating can be prevented. Accordingly, the composite layer 340 can be formulated to include a rare earth disilicate in combination with a variety of second phase materials having varying CTEs, that can be applied at a thickness so at to prevent coating degradation. Accordingly, materials once thought to be difficult to incorporate into a silicate-based layer of an EBC system, can be incorporated and applied with certain thicknesses in order to preserve operation of the overall EBC. Thus, the composite layer 340 can incorporate second phase materials previously thought to be unavailable for use in certain EBC coating systems, given their CTE mismatch with the substrate component.

In embodiments provided herein, comparison of the CTE of the composite layer 340 to the CTE of the underlying component 400 can instruct the thickness (T) for the composite layer 340. Generally speaking, the thickness (T) of the composite layer 340 can vary depending on Δ_{C}. Table 1 below illustrates example Δ_{C} values and suitable corresponding composite layer 340 thicknesses (T).

**TABLE 1**

| Δ_{C} | | Thickness (mm) | |
|---|---|---|---|
| 0 | 0.25 | 0.5 | 2.25 |
| 0.25 | 0.50 | 0.10 | 0.65 |
| 0.50 | 0.75 | 0.05 | 0.25 |
| 0.75 | 1.0 | 0.03 | 0.15 |
| 1.0 | 1.25 | 0.02 | 0.08 |
| 1.25 | 1.50 | 0.01 | 0.06 |
| 1.50 | 1.75 | 0.01 | 0.04 |
| 1.75 | 2.00 | 0.01 | 0.03 |
| 2.00 | 2.25 | 0.01 | 0.03 |

Furthermore, in certain embodiments Δ_{C} is from about 0 to about 0.25 and the thickness (T) is from about 0.5 to about 2.25. In other embodiments, Δ_{C} is from about 0.25 to about 1.00 and the thickness (T) is from about 0.10 to about 0.75. Still, in other embodiments Δ_{C} is from about 1 to about 2.25 and the thickness (T) is from about 0.03 to about 0.13. The thickness (T) can range from about 0.1 mm to about 0.80 mm.

Accordingly, the composite layer 340 having the thickness (T) as provided herein, is able to incorporate certain second phase materials for improving functional operation of the EBC 300 without the risk that the composite layer will spall or degrade during operation of the component part.

The composite layer 340 can include any rare earth disilicate having a general composition of RE₂Si₂O₇, where RE (a rare earth element) = La, Ce, Pr, Nd, Sm, Eu, Gd, Th, Dy, Ho, Er, Tm, Yb, and Lu, and includes the rare earth-like elements Y and Sc. In various embodiments, the rare earth disilicate is (Ybₓ,Y₁₋ₓ)₂Si₂O₇ where 0≦x≦1. In a particular embodiment, the rare earth disilicate is (Yb_{0.6}Y_{0.4})₂Si₂O₇. In another embodiment, the rare earth disilicate can include ytterbium disilicate, lutetium disilicate, or scandium disilicate. The rare earth disilicates have CTEs that are generally well-matched to the CTE of the CMC substrate material.

The composite layer 340 can also include a second phase material. In certain embodiments, the composite layer 340 can include from about 2 volume % to about 50 volume % of the second phase material. The second phase material can include certain materials configured to improve one or more properties of the composite layer 340 (e.g., corrosion and/or CMAS resistance). For example, in certain embodiments, the second phase material can include one or more rare earth garnets. In certain embodiments, rare earth garnet includes yttrium aluminum garnet (YAG). The rare earth garnet can include a doped YAG, such as a rare earth oxide doped YAG material. The YAG can be doped with one or more dopants that can be oxides of one or more of the following elements, La, Ce, Pr, Nd. Pm, Sm, Eu, Gd, TB, Dy, Ho, Er. Tm, Yb, Lu, and Y, Sr and Sc.

In certain embodiments, the second phase material includes one or more rare earth tantalates. For example, in certain embodiments, the second phase material can include a rare earth compound of the formula:

A_{1-b}B_{b}Z_{1-d}D_{d}MO₆

where A is Al, Ga, In, Sc, Y, Ce, Pr, Nd, Pm, Sm, Eu, Gd, Tb, Dy, Ho, Er, Tm, Yb, Lu, Fe, Cr, Co, Mn, Bi, or a mixture thereof; B is boron; b is 0 to about 0.5; Z is Hf, Ti, or a mixture thereof; D is Zr, Ce, Ge, Si, or a mixture thereof; d is 0 to about 0.5; and M is Ta, Nb, or a mixture thereof; and O is oxygen.

It is to be understood that the compound has distinct "sites" in its composition, with the "A site" being formed by A and/or B of Formula 1, the "Z site" being formed by Z and/or D of Formula 1, the "M site," and the oxygens.

The second phase material can include rare earth aluminates. For example, the one or more rare earth aluminates can include 2Gd₂O₃.Al₂O₃, 2Dy₂O₃.Al₂O₃, 2Y₂O₃.Al₂O₃, 2Er₂O₃.Al₂O₃, LaAlO₃, NdAlO₃, SmAlO₃, EuAlO₃, GdAlO₃, DyAlO₃, ErAlO₃., Dy₃Al₅O₁₂, Y₃Al₅O₁₂, Er₃Al₅O₁₂, Lu₃Al₅O₁₂, Yb₃Al₅O₁₂ and combinations thereof.

Still, in certain embodiments, the second phase material can include hafnia, zirconia, stabilized hafnia, stabilized zirconia (e.g., yttria-stabilized zirconia (YSZ)), rare earth hafnates, rare earth zirconates, rare earth gallium oxide, and combinations thereof. In certain embodiments, the second phase material can include aluminosilicates (e.g., mullite, barium strontium aluminosilicate (BSAS), rare earth aluminosilicates, etc.).

In some embodiments, the second phase material can include one or more rare earth disilicates. In embodiments where the second phase material includes one or more rare earth disilicates, the rare earth disilicate selected for the second phase material may be different from the rare earth disilicate of the composite coating. In other words, at least two different rare earth disilicates can be incorporated into the composite layer 340.

Generally, the second phase materials described herein are less susceptible to molten dust, erosion, impact, and/or mixed mode degradation mechanisms than current EBC compositions. Thus, addition of the second phase materials result in a more robust EBC, compared to current-state-of-the-art EBC, that remains on the substrate material to protect it from recession against water vapor in turbine engine environments. In summary, incorporation of these second phase materials into the composite layer, provide for a composite layer that exhibits better resistance against molten dust as compared to BSAS and rare earth silicate EBC materials, and may have higher hardness than BSAS and rare earth silicate materials, particular after exposure to molten dust (e.g., CMAS). Thus, the second phase materials can add resistance to CMAS, particle erosion and impact to a coating formed from such materials (e.g., an EBC).

The second phase materials can be incorporated into slurries or feedstocks for spraying along with the rare earth disilicate and can be applied to the component 400. For example, in certain embodiments, the second phase material can be applied to the component 400 and can be evenly dispersed throughout the thickness of the composite layer 340. In other embodiments, however, it is contemplated that the composite layer 340 could be formed from one or more sub-layers. In such embodiments, each of the sub-layers could include different amounts of second phase material. For example, in certain embodiments, the second phase material can be graded throughout the thickness (T) of the composite layer 340. In such embodiments, each of the sub-layers could include decreasing and/or increasing amount of second phase material as the composite layer 340 is formed from bottom to top. In other embodiments, however, the sub-layers can be formed such that certain sub-layers provided do not contain any second phase material. Accordingly, non-second phase material containing sub-layers can be included between second-phase material containing layers within the composite layer 340 as desired.

Now referring to FIG. 4, the EBC 300 can include a silicon bond coat 310, a composite layer 340, and a rare earth monosilicate layer 350 disposed on the composite layer 340. Rare earth (RE) monosilicates have a general composition of RE₂SiO₅, where RE= RE= La, Ce, Pr, Nd, Sm, Eu, Gd, Th, Dy, Ho, Er, Tm, Yb, and Lu, and includes the rare earth-like elements Y and Sc. In certain embodiments, the rare earth monosilicate can include (Yb_{y}-Y_{1-y})₂SiO₅ where 0≦y≦1 or mixtures thereof.

The layers of the EBC 300 can be applied to the component 400 substrate via any suitable method. The component can include a CMC component. The coating may be applied via any known coating technique including, but not limited to brushing, rolling, spraying, and dipping. Spraying techniques include thermal spraying, plasma spraying (e.g., air plasma spraying), and combinations thereof. For example, the bond coat 310 may be applied by thermal spray processes, chemical vapor deposition processes, electron beam physical vapor deposition processes, dipping in molten silicon, sputtering processes, and other conventional application processes known to those skilled in the art.

Optionally, prior to applying the bond coat layer on the surface of the component, the component can be pretreated mechanically, chemically or both to make the surface more receptive for the EBC. Suitable pretreatment methods include grit blasting, with or without masking of surfaces that are not to be subjected to grit blasting, micromachining, shot peening, laser etching, treatment with chemical etchants such as those containing hydrochloric acid, hydrofluoric acid, nitric acid, ammonium bifluorides and mixtures thereof, treatment with water under pressure (i.e., water jet treatment), with or without loading with abrasive particles, as well as various combinations of these methods. In certain embodiments, deposition of the silicon bond coat deposits a layer of silicon metal to the surface of the component. The silicon can be applied directly to a grit blasted surface of the component, for example by thermal spraying on the component when the component is at an elevated temperature. The silicon bond coat can be applied as a thin layer while completely covering the component to avoid any bare spots. Typically, the bond coat has a thickness ranging from about 50 micrometers to about 150 micrometers, such as about 70 micrometers to about 120 micrometers, such as about 100 micrometers.

Optionally, prior to applying the bond coat layer on the surface of the component, the component can be pretreated mechanically, chemically or both to make the surface more receptive for the EBC. Suitable pretreatment methods include grit blasting, with or without masking of surfaces that are not to be subjected to grit blasting, micromachining, shot peening, laser etching, treatment with chemical etchants such as those containing hydrochloric acid, hydrofluoric acid, nitric acid, ammonium bifluorides and mixtures thereof, treatment with water under pressure (i.e., water jet treatment), with or without loading with abrasive particles, as well as various combinations of these methods.

The composite layer 340 can then be applied to the component 400 via known coating technique including, but not limited to brushing, rolling, spraying, and dipping. Spraying techniques include thermal spraying, plasma spraying (e.g., air plasma spraying (APS)), and combinations thereof. Also, the materials for the composite layer 340 can be formulated into a slurry and applied to the component for further processing. The composite layer 340 can be deposited via any spraying technique, however, in certain embodiments, the composite layer 340 is deposited via APS. For example, an APS feedstock including rare earth silicate can be prepared. For example, the APS feedstock can include rare earth monosilicate and/or rare earth disilicate materials in combination with one or more combinations of second phase materials described herein.

Further aspects of the present disclosure are provided by the subject matter of the following clauses:

A coated component, comprising: a component substrate; a bond coat layer comprising silicon deposited on the component substrate; and a composite layer deposited on the bond coat layer, wherein the composite layer comprises a rare earth disilicate and a second phase material, wherein the composite layer has a thickness (T) from about 0.05 mm to about 2.25 mm, and a coefficient of thermal expansion that is different by a value of about 0 to about 2.25 from a coefficient of thermal expansion of the component substrate upon which the bond coat layer is deposited.

The coated component of any preceding clause, wherein Δ_{C} is from about 0 to about 0.25 and the thickness (T) is from about 0.5 to about 2.25.

The coated component of any preceding clause, wherein Δ_{C} is from about 0.25 to about 1.00 and the thickness (T) is from about 0.10 to about 0.75.

The coated component of any preceding clause, wherein Δ_{C} is from about 1 to about 2.25 and the thickness (T) is from about 0.03 to about 0.13.

The coated component of any preceding clause, wherein the thickness (T) is from about 0.1 mm to about 0.80 mm.

The coated component of any preceding clause, wherein the second phase material is present in an amount of from about 2 volume% to about 50 volume%.

The coated component of any preceding clause, wherein the second phase material is graded throughout the composite layer.

The coated component of any preceding clause, wherein the second phase material comprises one or more rare earth garnets.

The coated component of any preceding clause, wherein the one or more rare earth garnets comprises yttrium aluminum garnet.

The coated component of any preceding clause, wherein the second phase material comprises one or more rare earth tantalates.

The coated component of any preceding clause, wherein the second phase material comprises one or more rare earth aluminates.

The coated component of any preceding clause, wherein the one or more rare earth aluminates comprises 2Gd₂O₃.Al₂O₃, 2Dy₂O₃.Al₂O₃, 2Y₂O₃.Al₂O₃, 2Er₂O₃.Al₂O₃, LaAlO₃, NdAlO₃, SmAlO₃, EuAlO₃, GdAlO₃, DyAlO₃, ErAlO₃., Dy₃Al₅O₁₂, Y₃Al₅O₁₂, Er₃Al₅O₁₂, Yb₃Al₅O₁₂ and Lu₃Al₅O₁₂.

The coated component of any preceding clause, wherein the second phase material comprises one or more rare earth zirconates and/or one or more rare earth hafnates.

The coated component of any preceding clause, wherein the second phase material comprises yttria-stabilized zirconia.

The coated component of any preceding clause, wherein the second phase material comprises silica.

The coated component of any preceding clause, wherein the rare earth disilicate comprises a first rare earth disilicate and the second phase material comprises a second rare earth disilicate, wherein the first rare earth disilicate and the second rare earth disilicate are different.

The coated component of any preceding clause, wherein at least one of the first rare earth disilicate or second rare earth disilicate comprises a rare earth element comprising ytterbium (Yb), yttrium (Y), scandium (Sc), lutetium (Lu), lanthanum (La), cerium (Ce), praseodymium (Pr), neodymium (Nd), samarium (Sm), dysprosium (Dy), holmium (Ho), erbium (Er), thulium (Tm), europium (Eu), gadolinium (Gd), terbium (Tb), promethium (Pm), or combinations thereof.

The coated component of any preceding clause, wherein at least one of the first rare earth disilicate or second rare earth disilicate comprises ytterbium disilicate, lutetium disilicate, or scandium disilicate.

The coated component of any preceding clause, comprising a rare earth monosilicate layer disposed on the composite layer, wherein the rare earth monosilicate layer has a thickness of from about 1 mil to about 3 mil.

A gas turbine engine component, comprising: a component substrate having a first coefficient of thermal expansion (Ci), and an environmental barrier coating disposed on the component substrate, the environmental barrier coating comprising: a bond coat layer deposited on the component substrate, wherein the bond coat layer comprises silicon; and a composite layer deposited on the bond coat layer, wherein the composite layer comprises a rare earth disilicate and a second phase material, and wherein the composite layer has a second coefficient of thermal expansion (C₂) and a thickness (T), wherein T is from about 0.05 mm to about 2.25 mm, and wherein a difference between Ci and C₂ (Δ_{C}) is from about 0 to about 2.25.

This written description uses exemplary embodiments to disclose various examples, including the best mode, and also to enable any person skilled in the art to practice the disclosed embodiments, including making and using any devices or systems and performing any incorporated methods. The patentable scope of the disclosed embodiments is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A coated component comprising:
a component substrate (400);
a bond coat layer (310) comprising silicon deposited on the component substrate (400); and
a composite layer (340) deposited on the bond coat layer (310), wherein the composite layer (340) comprises a rare earth disilicate and a second phase material, wherein the composite layer (340) has a thickness (T) from about 0.05 mm to about 2.25 mm, and a coefficient of thermal expansion that is different by a value of about 0 to about 2.25 from a coefficient of thermal expansion of the component substrate (400) upon which the bond coat layer (310) is deposited.

2. The coated component of claim 1, wherein Δ_{C} is from about 0 to about 0.25 and the thickness (T) is from about 0.5 to about 2.25.

3. The coated component of any preceding claim, wherein Δ_{C} is from about 0.25 to about 1.00 and the thickness (T) is from about 0.10 to about 0.75.

4. The coated component of any preceding claim, wherein Δ_{C} is from about 1 to about 2.25 and the thickness (T) is from about 0.03 to about 0.13.

5. The coated component of any preceding claim, wherein the thickness (T) is from about 0.1 mm to about 0.80 mm.

6. The coated component of any preceding claim, wherein the second phase material is present in an amount of from about 2 volume% to about 50 volume%.

7. The coated component of any preceding claim, wherein the second phase material is graded throughout the composite layer (340).

8. The coated component of any preceding claim, wherein the second phase material comprises one or more rare earth garnets.

9. The coated component of claim 8, wherein the one or more rare earth garnets comprises yttrium aluminum garnet.

10. The coated component of any preceding claim, wherein the second phase material comprises one or more rare earth tantalates.

11. The coated component of any preceding claim, wherein the second phase material comprises one or more rare earth aluminates.

12. The coated component of claim 11, wherein the one or more rare earth aluminates comprises 2Gd₂O₃.Al₂O₃, 2Dy₂O₃.Al₂O₃, 2Y₂O₃.Al₂O₃, 2Er₂O₃.Al₂O₃, LaAlO₃, NdAlO₃, SmAlO₃, EuAlO₃, GdAlO₃, DyAlO₃, ErAlO₃., Dy₃Al₅O₁₂, Y₃Al₅O₁₂, Er₃Al₅O₁₂, Yb₃Al₅O₁₂ and Lu₃Al₅O₁₂.

13. The coated component of any preceding claim, wherein the second phase material comprises one or more rare earth zirconates and/or one or more rare earth hafnates.

14. The coated component of any preceding claim, wherein the second phase material comprises yttria-stabilized zirconia.

15. The coated component of any preceding claim, wherein the second phase material comprises silica.
